Europäisches Patentamt

European Patent Office

Office européen des brevets

(19)

(11) Veröffentlichungsnummer: **0 171 588**
**B1**

(12) **EUROPÄISCHE PATENTSCHRIFT**

(45) Veröffentlichungstag der Patentschrift: **26.09.90**

(21) Anmeldenummer: **85108373.3**

(22) Anmeldetag: **05.07.85**

(51) Int. Cl.⁵: **C 07 C 211/56, C 08 G 59/50, C 08 G 18/38, C 08 G 18/32**

(54) **Kettenverlängerungs bzw. Vernetzungsmittel.**

(30) Priorität: **06.07.84 CH 3281/84**

(43) Veröffentlichungstag der Anmeldung:
**19.02.86 Patentblatt 86/08**

(45) Bekanntmachung des Hinweises auf die
Patenterteilung:
**26.09.90 Patentblatt 90/39**

(84) Benannte Vertragsstaaten:
**AT BE CH DE FR GB IT LI LU NL SE**

(56) Entgegenhaltungen:
**DE-A-2 339 237**
**FR-A-2 054 814**
**GB-A- 935 606**

(73) Patentinhaber: **LONZA AG**
**Gampel/Wallis (CH)**

(72) Erfinder: **Völker, Theodor, Dr.**
**Kleestrasse 7**
**Reinach (Kanton Baselland) (CH)**
Erfinder: **Althaus, Hans, Dr.**
**Holzackerweg 6**
**Brig-Glis (Kanton Wallis) (CH)**

(74) Vertreter: **Weinhold, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

**Die Akte enthält technische Angaben, die nach dem Eingang der Anmeldung eingereicht wurden und die nicht in dieser Patentschrift enthalten sind.**

EP 0 171 588 B1

## Beschreibung

Die Erfindung betrifft neue Ames-Test-negative Kettenverlängerungsmittel bzw. Vernetzungsmittel für Polyurethan und Epoxidharze.

Die Herstellung von Polyurethanen nach dem Isocyanat-Polyadditionsverfahren ist bekannt. Beispielsweise wurden Verbindungen mit reaktionsfähigen Wasserstoffatomen, wie Polyester mit endständigen OH-Gruppen, mit Diisocyanaten zu einem Prepolymere umgesetzt (DE—AS 12 40 654), welches dann in einem zweiten Schritt mit einem Kettenverlängerungsmittel oder Vernetzungsmittel, üblicherweise einem aromatischen Diamin, bei höherer Temperatur zur Reaktion gebracht wurde. Die entstehenden Giessfähige Reaktionsmass konnte dann in einer Forme über längere Zeit ausgehärtet werden. Es war dabei Voraussetzung, dass die Prepolymere mit den Kettenverlängerungsmitteln oder Vernetzungsmitteln nicht allzu schnell reagierten, damit eine angemessene Verarbeitungszeit in der flüssigen Phase gewährleistet war.

Zu diesem Zweck haben sich die folgenden reaktionsträgen Diamine, das o-Chlorbenzidin, 2,5-Dichlor-1,4-phenylendiamin und besonders das 3,3'-Dichlor-4,4'-diaminodiphenylmethan (MOCA) bewährt.

Die Herstellung von Epoxidharzen erfolgt ebenfalls auf bekannte Weise.

En kann beispielsweise so verfahren werden, dass an eine Monoepoxyverbindung wasserstoffaktive Verbindungen, wie z.B. Alkohole, Phenole oder Säuren, angelagert werden, unter Ausbildung von Chlorhydrinderivaten, die dann unter HCl-Abspaltung zu Glycidyl-Verbindungen umgesetzt werden. Diese bilden die Basis zur Weiterumsetzung zu Epoxidharzen mit Härtern, wie z.B. Anhydriden, Di- und Polyaminen (Lit. Ullmanns Enzyclopäedie der Technischen Chemie, 4. Aufl. Bd. 10, S.563 ff). Hierzu besonders bewährt haben sich Diamine, insbesondere das Methylendianilin (MDA) und das 2,2'-Dichlormethylen-bis-anilin (MOCA).

Die bisher bekannten Diamine als Kettenverlängerungsmittel oder Vernetzungsmittel haben aber als bedeutender Nachteil cancerogene und mutagene Eigenschaften.

Vor allem das 3,3'-Dichlor-4,4'-diaminodiphenylmethan (MOCA) und das Methylendianilin (MDA) wurden aufgrund ihrer vermuteten Cancerogenität (Ames-Test positiv, vgl. Ames et al, Proc. Nat. Acad. Sci. USA 70 (1979) 782, 2281) ungern verwendet; deren Anwendung wurde sogar in einigen Ländern verboten.

Eine weitere Unannehmlichkeit bestand darin, dass durch die Wahl des Kettenverlängerungsmittels oder Vernetzungsmittels die Topfzeit des Elastomers gegeben war und nicht, je nach Anwendung des Elastomers, in einem weiten Bereich variiert werden konnte.

Aus der GB—A—935 606 ist ferner als Kettenverlängerungs- bzw. Vernetzungsmittel für Polyurethane u.a. 2,2'-Dichlor-6,6'-diethylmethylen-bis-anilin bekannt. Dieses fürht jedoch zu Polyurethanen mit einer wenig befriedigenden Bruchdehnung.

Aufgabe der vorliegenden Erfindung ist es daher, obige Nachteil zu beseitigen und Kettenverlängerungsmittel bzw. Vernetzungsmittel für Polyurethane und Epoxiharze, vorzuschlagen, die Ames-Test negativ sind.

Gegenstand der Erfindung sind Kettenverlängerungsmittel bzw. Vernetzungsmittel für Polyurethane und Epoxidharze, bestehend aus 2,6,2',6'-Tetraethyl-p,p'-methylen-bis-anilin,2,6,2'-Triethyl-6'-chlor-p,p'-methylen-bis-anilin und 2,2'-Dichlor-6,6'-diethyl-p,p'-methylen-bis-anilin.

Die Herstellung des in den erfindungsgemäßen Gemischen enthaltenen 2,2'-Dichlor-6,6'-diethyl-p,p'-methylen-bis-anilin oder die Gemische davon mit 2,6,2',6'-Tetraethyl-p,p'-methylen-bis-anilin und 2,6,2'-Triethyl-6'-chlor-p,p'-methylen-bis-anilin kann durch Kondensation von 2-Chlor-6-ethyl-anilin und 2,6-Diethylanilin mit Formaldehyd oder Formaldehyd bildenden Verbindungen, wie z.B. Paraformaldehyd, in Gegenwart eines Saueren Mediums erfolgen.

Zweckmässig werden mindestens 30 Mol.% 2-Chlor-6-ethylanilin, vorzugsweise mindestens 80 Mol% 2-Chlor-6-ethylanilin, zur Kondensation mit 2,6-Diethylanilin eingesetzt.

Zweckmässig wird Formaldehyd in Mengen von 0,4 bis 0,75 Mol, vorzugsweise in Mengen von 0,45 bis 0,55 Mol, pro Mol Ausgangsamin, angewendet.

Zur Erzielung eines sauren Mediums werden zweckmässig anorganische Säuren, wie z.B. Schwefelsäure, zugesetzt.

Die Applikation der erfindungsgemässen Kondensate richtet sich in der Menge sowie in der Art der Zugabe nach den Eigenschaften der jeweiligen Ausgangsprodukte und nach der Art der herzustellenden Endprodukte.

Die Einarbeitung der erfindungsgemässen Ames-Test-negativen Kettenverlängerungsmittel bzw. Vernetzungsmittel in Polyurethanen kann nach einer für die Polyurethanherstellung üblichen Weise, z.B. mit dem Reaktionsspritzgussverfahren (RIM), dem Streich- oder dem Tauchverfahren, mit den üblichen Reaktionssystemen der Polyisocyanate, Polyhydroxyverbindungen, Katalysatoren und weiteren Zusätzen erfolgen.

Geeignete Polyisocyanate dafür sind aromatische Polyisocyanate, wie z.B. Methylenphenylendiisocyanat (MDI), Toluylendiisocyanat (TDI), Naphthalindiisocyanat (NDI), oder aliphatische und cycloaliphatische Polyisocyanate, wie z.B. Isophorondiisocyanat bzw. Hexamethylendiisocyanat.

Als Polyhydroxyverbindungen kommen, z.B. Polyglykole, Polyether-Polyole und auch Polyester-Polyole in Frage.

Es können auch alle üblichen Katalysatoren, wie Tetramethylbutandiamin (TMBDA), Diazabicyclooctan (DABCO) und auch Dibutylzinndilaurat (DBTC) oder Kombinationen davon, und Zusätze wie Weichmacher, Treibmittel, Flammschutzmittel etc. angewendet werden.

Die Kettenverlängerungsmittel bzw. Vernetzungsmittel werden zweckmässig in Menge von 0,4 bis 0,6 Mol, vorzugsweise in einer Menge von 0,5 Mol pro Mol NCO-Gruppen, d.h. in äquivalenten Mengen, zum Reaktionssystem mit Prepolymeren zugesetzt, bzw. anteilig zusammen mit den Polyolen.

Die Reaktionssysteme können nach einem für Polyurethane üblichen Verfahren verarbeitet werden. So kann nach dem One-shot-Verfahren oder auch nach dem Prepolymer-Verfahren gearbeitet werden.

Durch die Variation der Gemischzusammensetzungen der erfindungsgemässen Ames-Test-negativen Kettenverlängerungsmittel bzw. Vernetzungsmittel im Reaktionssystem kann die Topfzeit, d.h. die Zeit T, bis das Polyurethan-Reaktionsgemisch an einem gleichmässig horizontal bewegten, eingetauchten Spatel Fäden zieht, massgeblich verändert werden.

Folgende Tabelle zeigt den Einfluss verschiedener zweckmässiger Zusammensetzungen der Ames-Test-negativen Kettenverlängerungsmittel bzw. Vernetzungsmittel auf die Topfzeit T im Vergleich mit Kettenverlängerungsmitteln oder Vernetzungsmitteln aus dem Stand der Technik im einem Standard-Polyurethan-Elastomer:

TABELLE

| Produktbezeichnung | Ames-Test | Bemerkungen | T in sec. | optimale Härtungs-temp. |
|---|---|---|---|---|
| Diethyltoluoyldiamin | + | Vergl.substanzen | 9 | — |
| 2,2',6,6'-Tetraethyl-p,p'-methylen-bis-anilin | — | " | 5 | — |
| 2,2'Dichlormethylen-bis-anilin (MOCA) | + | " | 105 | 70°C |
| Kondensat 1 | — | gem.Erfind. | 38 | 70°C |
| Kondensat 2 | — | " | 40 | 70°C |
| Kondensat 3 | — | " | 13 | 70°C |
| Kondensat 4 | — | " | 15 | 45°C |
| Kondensat 5 | — | " | 11 | 45°C |
| Kondensat 6 | — | " | 10 | 45°C |
| Kondensat 7 | — | " | 10 | 45°C |

Bevorzugt wird Kondensat 1 angewendet.

Eingearbeitet in ein Standard-Polyurethan-Elastomer lassen sich Produkte erhalten, die bei 70°C noch auf allen gängigen maschinen verarbeitbar sind.

Ausserdem weisen diese Produkte folgende vorteilhaften physikalischen Eigenschaften auf (im Vergleich zu MOCA):

| Eigenschaftsprüfung | mit MOCA | mit Konden-sat 1 | Bemerkungen |
|---|---|---|---|
| Shore-Härte D | 54 | 53 | |
| Zugfestigkeit N/mm² | | | |
| bis zum Riss | 28,20 | 27,32 | |
| bis 3% Dehnung | 5,54 | 6,09 | |
| bis 5% Dehnung | 6,42 | 7,44 | |
| bis 7% Dehnung | 7,11 | 8,36 | mit Kondensat 1 |
| bis 10% Dehnung | 7,38 | 9,24 | 15—20% mehr |
| bis 100% Dehnung | 15,42 | 16,39 | belastbar |
| Bruchdehnung % | 236 | 246 | |
| "Strukturfestigkeit" | | | |
| Raumtemperatur | 75 | 51 | mit Kondensat 1 mit |
| 70°C | 43 | 44 | steigender Temperatur strukturfester, ab 70°C überlegen gegenüber MOCA |

Die erfindungsgemässen Kettenverlängerungsmittel bzw. Vernetzungsmittel können auch vorteilhaft als Aminhärter für Epoxidharze angewendet werden. Die Einarbeitung der Aminhärter kann un übliche Harze, wie sie z.B. aus Bis-phenol A und Epichlorhydrin gebildet werden, auf ühliche Weise erfolgen. Zweckmässig werden die Aminhärter in Mengen von 0,2 bis 0,4 Aequivalenten, vorzugsweise 0,25 Aequivalenten, pro Aequivalent Epoxy-Gruppe zum Epoxidharz zugesetzt.

Durch den Einsatz der erfindungsgemässen Ames-Test-negativen Aminhärter werden gehärtete Epoxidharze mit vergleichbaren Wärmeformbeständigkeiten wie mit den als cancerogen und mutagen bekannten Härtern MOCA und MDA erreicht.

Beispiel
Herstellung der erfindungsgemässen Kondensate.

Jeweils 1 Mol 2-Ethyl-6-chloranilin bzw. Gemische davon mit 2,6-Diethylanilin wurden mit Xylol im Gewichtsverhältnis 1:1 verdünnt, mit 3 g 47,8%iger Schwefelsäure versetzt und mit 47,1 g Formaldehydlösung 30% (Formalin) (=0,472 Mol) unter Rühren und Rückfluss 6 Stunden zur Reaktion gebracht. Mit Natronlauge im Überschuss wurde neutralisiert und weitere 30 Minuten unter Rückfluss gerührt. Nach Phasentrennung bei 50°C wurde die organische Phase nochmals mit 150 ml Wasser ausgewaschen und bei 50°C getrennt. Bei etwa $1,33 \cdot 10^4$ Pa (100 Torr) wurde nun zuerst das Xylol-Isomergemisch abgetrieben und schliesslich bei einer Kolbentemperatur von 220°C und $6,7 \cdot 10^2$ Pa (5 Torr) die nichtumgesetzten Anilinderivate entfernt. Die isolierten Ausbeuten an Methylen-bis-verbindungen lagen durchwegs bei über 97% der Theorie bzw. auf eingesetztes $CH_2O$.

Kondensat 1
92,2 Mol% 2-Ethyl-6-chloranilin (CEA) und 7,8 Mol%, 2,6-Diethylanilin (DEA) wurden der Kondensation unterworfen.

Erhalten wurde ein hellbraunes Produkt mit einem Schmelzbereich von 100 bis 105°C mit folgender Zusammensetzung in Mol%:

| | |
|---|---|
| 2,2'-Diethyl-6,6'-dichlor-p,p'-methylen-bis-anilin | 89,3 |
| 2,6,2'-Triethyl-6'-chlor-p,p'-methylen-bis-anilin | 10,1 |
| 2,6,2',6'-Tetraethyl-p,p'-methylen-bis-anilin | 0,65 |

Das Produkt zeigte im Ames-Test keine mutagene Wirkung.

Kondensat 2
89,6 Mol% CEA und 10,4 Mol% DEA wurden der Kondensation unterworfen.

Erhalten wurde ein braungefärbtes kristallines Produkt mit einem Schmelzbereich von 95 bis 100°C mit folgender Zusammensetzung in Mol%.

| | |
|---|---|
| 2,2'-Diethyl-6,6'-dichlor-p,p'-methylen-bis-anilin | 80,3 |
| 2,6,2'-Triethyl-6'-chlor-p,p'-methylen-bis-anilin | 18,6 |
| 2,6,2',6'-Tetraethyl-p,p'-methylen-bis-anilin | 1,1 |

Das Produkt zeigte im Ames-Test keine mutagene Wirkung.

Kondensat 3

79,7 Mol% CEA und 20,3 Mol% DEA wurden der Kondensation unterworfen.

Erhalten wurde ein hellbraunes Produkt mit einem Schmelzbereich von 91 bis 101°C mit folgender Zusammensetzung in Mol%:

| | |
|---|---|
| 2,2'-Diethyl-6,6'-dichlor-p,p'-methylen-bis-anilin | 73,9 |
| 2,6,2'-Triethyl-6'-chlor-p,p'-methylen-bis-anilin | 21,1 |
| 2,6,2',6'-Tetraethyl-p,p'-methylen-bis-anilin | 5,0 |

Das Produkt zeigt im Ames-Test keine mutagene Wirkung.

Kondensat 4

70,3 Mol% CEA und 29,7 Mol% DEA wurden der Kondensation unterworfen.

Erhalten wurde ein hellbraunes Produkt mit einem Schmelzbereich von 83 bis 94°C mit folgender Zusammensetzung in Mol%:

| | |
|---|---|
| 2,2'-Diethyl-6,6'-dichlor-p,p'-methylen-bis-anilin | 56,7 |
| 2,6,2'-Triethyl-6'-chlor-p,p'-methylen-bis-anilin | 32,6 |
| 2,6,2',6'-Tetraethyl-p,p'-methylen-bis-anilin | 10,7 |

Das Produkt zeigte im Ames-Test keine mutagene Wirkung.

Kondensat 5

64,0 Mol% CEA und 36,0 Mol% DEA wurden der Kondensation unterworfen.

Erhalten wurde ein hellbraunes Produkt mit einem Schmelzbereich von 78 bis 91°C mit folgender Zusammensetzung in Mol%:

| | |
|---|---|
| 2,2'-Diethyl-6,6'-dichlor-p,p'-methylen-bis-anilin | 43,3 |
| 2,6,2'-Triethyl-6'-chlor-p,p'-methylen-bis-anilin | 42,5 |
| 2,6,2',6'-Tetraethyl-p,p'-methylen-bis-anilin | 14,2 |

Das Produkt zeigte im Ames-Test keine mutagene Wirkung.

Kondensat 6

55,3 Mol% CEA und 44,7 Mol% DEA wurden der Kondensation unterworfen.

Erhalten wurde ein hellbraunes Produkt mit einem Schmelzbereich von 70 bis 73°C mit folgender Zusammensetzung in Mol%:

| | |
|---|---|
| 2,2'-Diethyl-6,6'-dichlor-p,p'-methylen-bis-anilin | 26,6 |
| 2,6,2'-Triethyl-6'-chlor-p,p'-methylen-bis-anilin | 54,9 |
| 2,6,2',6'-Tetraethyl-p,p'-methylen-bis-anilin | 18,4 |

Das Produkt zeigte im Ames-Test keine mutagene Wirkung.

Kondensat 7

39,8 Mol% CEA und 60,2 Mol% DEA wurden der Kondensation unterworfen.

Erhalten wurde ein braunes Produkt mit einem Schmelzbereich von 73 bis 74°C mit folgender Zusammensetzung in Mol%:

| | |
|---|---|
| 2,2'-Diethyl-6,6'-dichlor-p,p'-methylen-bis-anilin | 12,0 |
| 2,6,2'-Triethyl-6'-chlor-p,p'-methylen-bis-anilin | 59,0 |
| 2,6,2',6'-Tetraethyl-p,p'-methylen-bis-anilin | 29,0 |

Das Produkt zeigt im Ames-Test keine mutagene Wirkung.

Bestimmung der "Topfzeit" in Polyurethan-elastomeransätzen:

1 Mol Polytetramethylenglykol (MG 1000) wurde auf 80°C erhitzt und unter Rühren 2 Stunden bei einem Druck von $1,6 \cdot 10^3$ Pa (12 mmHg) evakuiert und entwässert. Anschliessend wurden bei 45 bis 50°C 2,1 Mol geschmolzenes Methylendiphenyldiisocyanat (sog. MDI pure), mit einem Schmelzpunkt von 40°C, zugefügt und unter Stickstoff und Rühren bei 80°C zur Reaktion gebracht. Das erhaltene Prepolymer mit einem NCO-Gehalt von 6% wurde vor seinem Gebrauch 1 Stunde bei 60°C im Wasserstrahlvakuum entgast. Dieses Prepolymer wurde mit der äquimolaren Menge Diamin (bzw. Kondensat) versetzt und 10 Sekunden bei 50°C mit dem Spatel gleichmässig verrührt. Das Reaktionsgemisch wurde in eine auf 100°C vorgeheizte Aluminiumform (Innenmasse 120×10×5 mm) gegossen. Die Zeit in Sekunden (T), bis das

Gemisch an einem gleichmässig eintauchenden Spatel Fäden zog, bezeichneten wir als "Topfzeit" (Resultate vgl. Tabelle).

**Patentanspruch**

Kettenverlängerungsmittel bzw. Vernetzungsmittel für Polyurethane and Epoxidharze, bestehend aus 2,6,2',6'-Tetraethyl-p,p'-methylen-bis-anilin, 2,6,2'-Triethyl-6'-chlor-p,p'-methylen-bis-anilin und 2,2'-Dichlor-6,6'-diethyl-p,p'-methylen-bis-anilin.

**Revendication**

Agent de prolongement des chaînes ou de réticulation pour les polyuréthanes et les résines époxy, constitué de 2,6,2',6'-tétraéthyl-p,p'-méthylène-bis-aniline, 2,6,2'-triéthyl-6'-chloro-p,p'-méthylène-bis-aniline et 2,2'-dichloro-6,6'-diéthyl-p,p'-méthylène-bis-aniline.

**Claim**

Chain lengthening or cross-linking agent for polyurethanes and epoxy resins, consisting of 2,6,2',6'-tetraethyl-p,p'-methylene-bis-aniline, 2,6,2'-triethyl-6'-chloro-p,p'-methylene-bis-aniline and 2,2'-dichloro-6,6'-diethyl-p,p'-methylene-bis-aniline.